# FASCICULE DE BREVET EUROPEEN

(11) **EP 2 128 425 B1**
(45) Date de publication et mention de la délivrance du brevet: **20.07.2011**
(21) Numéro de dépôt: 09290378.0
(22) Date de dépôt: 25.05.2009
(51) Int. Cl.: F02M 35/12, F04B 39/00, F16L 55/033

(54) **Dispositif d'atténuation acoustique pour ligne d'admission d'un moteur thermique, et ligne d'admission l'incorporant**
Vorrichtung zur Geräuschdämpfung für eine Ansaugleitung einer Brennkraftmaschine und Ansaugleitung, die diese Vorrichtung umfasst
Sound attenuation device for the intake line of an internal combustion engine and intake line including same

(30) Priorité: 30.05.2008 FR 0802974
(43) Date de publication de la demande: 02.12.2009
(73) Titulaire: Hutchinson, 75008 Paris (FR)
(72) Inventeur: Caliskan, Alper, 45140 St Jean de la Ruelle (FR)
(74) Mandataire: Bolinches, Michel Jean-Marie

(56) Documents cités:
- EP-A- 1 260 697
- DE-A1- 3 531 353
- DE-A1- 19 956 172
- US-A- 4 213 414
- US-A- 4 874 062
- US-A1- 2004 007 197

## Description

La présente invention concerne un dispositif d'atténuation acoustique en particulier pour une ligne d'admission d'un moteur thermique à combustion interne, tel qu'un moteur turbocompressé pour véhicule automobile, et une telle ligne d'admission l'incorporant.

De manière connue, les dispositifs d'atténuation acoustique pour ligne d'admission d'un moteur turbocompressé de véhicule automobile peuvent comporter une enveloppe tubulaire radialement externe qui est destinée à être parcourue par un fluide gazeux sous pression, et avec les portions d'extrémités de laquelle est solidarisée une structure de conduite radialement interne formant deux chambres annulaires de résonance avec l'enveloppe.

On peut par exemple citer le document DE-A1-199 56 172 pour la description d'un tel dispositif, dans lequel deux renflements de l'enveloppe sont reliés entre eux par un rétrécissement radial périphérique dont est solidaire un tronçon médian de la structure de conduite interne, laquelle comporte deux autres tronçons d'extrémité respectivement solidaires des deux portions d'extrémité de l'enveloppe. Un autre dispositif d'atténuation acoustique connu est décrit dans le document EP 1 260 697 A2.

Ces dispositifs d'atténuation connus, qui sont intégralement métalliques ou bien entièrement réalisés en matière plastique rigide, sont usuellement raccordées à la ligne d'admission d'air par des conduits de raccordement en caoutchouc permettant la prise de rayons de courbure déterminés en fonction de la configuration de la ligne et de la place disponible, des colliers de serrage venant enserrer les points de raccordement entre les extrémités respectives du dispositif et ces conduits en caoutchouc. En variante, on peut réaliser ces raccordements par soudage ou brasage des extrémités du dispositif d'atténuation sur des tubulures métalliques intermédiaires.

Un inconvénient majeur de ces dispositifs d'atténuation connus réside dans les opérations supplémentaires requises (e.g. serrage par des colliers ou soudage, notamment) pour réaliser ce raccordement du dispositif d'atténuation aux conduits en caoutchouc et, par conséquent, dans le coût global de fabrication et d'assemblage de la ligne d'admission correspondante.

Un autre inconvénient de ces dispositifs d'atténuation connus réside dans leur encombrement, qui est essentiellement dû aux renflements de l'enveloppe externe qui forment les chambres de résonance en s'écartant d'une hauteur radiale relativement importante de la structure de conduite interne.

Un but de la présente invention est de proposer un dispositif d'atténuation acoustique pour une ligne d'admission d'un moteur thermique à combustion interne, tel qu'un moteur turbocompressé pour véhicule automobile, qui remédie aux inconvénients précités, ce dispositif étant destiné à être parcouru par un fluide gazeux sous pression et étant intégré à cette ligne par des conduits de raccordement souples et déformables.

Un dispositif d'atténuation selon l'invention comporte :
- une enveloppe tubulaire radialement extérieure présentant deux portions d'extrémité respectivement d'entrée et de sortie du fluide et une portion axialement centrale de diamètre supérieur à celui de ces portions d'extrémité et reliant ces dernières entre elles, et
- une structure de conduite radialement interne à l'enveloppe qui est solidaire de ces portions d'extrémité et qui comporte un tronçon axialement central en contact avec ladite portion centrale et délimitant avec cette dernière deux chambres annulaires de résonance.

A cet effet, ce dispositif de l'invention est caractérisé en ce que l'enveloppe est constituée par deux desdits conduits souples montés axialement de part et d'autre et au contact d'une collerette radiale de la structure de conduite formant un renflement circonférentiel pour ladite portion centrale, des moyens de serrage étant appliqués sur ces conduits pour plaquer de manière étanche cette portion centrale sur ledit tronçon central.

On notera que ces conduits souples de raccordement qui font partie intégrante du dispositif d'atténuation selon l'invention en formant son enveloppe externe permettent de simplifier notablement le procédé d'assemblage et donc le coût d'intégration de ce dispositif au reste de la ligne d'admission, en comparaison des raccordements connus qui nécessitent les opérations supplémentaires précitées entre chaque dispositif d'atténuation et les conduits souples à y raccorder. En effet, l'on n'a plus avec l'invention à solidariser ces conduits souples de la ligne d'admission avec les portions d'extrémité de l'enveloppe tubulaire, réduisant ainsi les interfaces d'assemblage de cette ligne avec le dispositif d'atténuation.

Selon une autre caractéristique de l'invention, lesdits conduits peuvent former respectivement deux parties de l'enveloppe qui sont sensiblement symétriques l'une de l'autre par rapport à ladite collerette et qui comprennent chacune l'une desdites portions d'extrémité et une moitié de ladite portion centrale.

Avantageusement, lesdits conduits sont chacun à base d'un matériau élastomère, tel qu'un caoutchouc, et lesdits moyens de serrage peuvent comprendre au moins deux colliers métalliques respectivement appliqués sur ces conduits pour assurer l'étanchéité précitée.

Selon une autre caractéristique de l'invention, la structure de conduite peut comporter deux tronçons tubulaires d'extrémité qui sont respectivement solidarisés avec les portions d'extrémité de l'enveloppe et qui sont chacun séparés dudit tronçon central par un espace axial de liaison faisant communiquer radialement chaque tronçon d'extrémité avec ladite chambre de résonance correspondante.

Quant à la portion centrale de l'enveloppe, elle est reliée à chacune desdites portions d'extrémité de celle-ci par une portion de transition divergeant à partir de cette portion d'extrémité, ledit tronçon d'extrémité radialement en regard de chaque portion de transition présentant une partie convergente délimitant chaque chambre de résonance avec la portion de transition, ladite portion centrale et ledit tronçon central. Avantageusement, chaque portion de transition et cette partie convergente de chaque tronçon d'extrémité sont sensiblement coniques, en formant toutes deux un angle avec la direction axiale qui est inférieur à 60°.

On notera que cet agencement des tronçons d'extrémité et du tronçon central pour la structure de conduite, en relation avec les portions de transition et la portion centrale de l'enveloppe, permet de minimiser l'encombrement radial du dispositif d'atténuation selon l'invention, notamment en comparaison des dispositif d'atténuation connus caractérisés par deux renflements radiaux de l'enveloppe prolongeant respectivement à angle droit les portions d'extrémités de celle-ci.

Selon une autre caractéristique de l'invention, ledit tronçon central peut être défini par deux parois radiales en forme de couronnes sensiblement perpendiculaires à ladite portion centrale de l'enveloppe, et par une paroi axiale sensiblement cylindrique qui s'étend à angle droit à partir des sommets respectifs de ces parois radiales et qui est montée sous cette portion centrale en présentant ladite collerette.

Selon un premier mode de réalisation de l'invention, la section de passage pour le fluide dudit tronçon central est définie par la face radialement interne de ladite paroi axiale de ce tronçon, lesdites parois radiales n'étant pas reliées entre elles en leurs bases respectives.

Selon un second mode de réalisation de l'invention, la section de passage pour le fluide du tronçon central est définie par la face radialement interne d'une autre paroi axiale de ce tronçon qui relie lesdites parois radiales entre elles en leurs bases respectives, de sorte que ce tronçon central présente un volume annulaire radialement externe fermé au fluide.

Selon un exemple de réalisation de l'invention commun à ces premier ou second modes, chacun desdits tronçons d'extrémité est relié à ladite paroi radiale correspondante dudit tronçon central par au moins une paire de pattes axiales de renfort de la structure de conduite, laquelle est formée d'un seul tenant, chaque espace axial de liaison étant défini circonférentiellement par au moins deux lumières en arcs de cercle formées de part et d'autre de chaque patte et faisant communiquer radialement l'intérieur de la structure de conduite avec chaque chambre de résonance.

En variante selon ces premier et second modes, lesdits tronçons d'extrémité sont distants et indépendants dudit tronçon central, chaque espace axial de liaison formant un espace vide entre le tronçon d'extrémité correspondant et ce tronçon central. En d'autres termes, ces tronçons d'extrémité ne sont pas reliés entre eux, de sorte que la structure de conduite est alors discontinue dans la direction axiale.

D'une manière générale en référence aux deux modes précités, lesdits tronçons d'extrémité peuvent présenter chacun une paroi continue (i.e. continûment fermée, étant-dépourvue d'ouvertures ou de fentes), à l'exception des lumières en arc de cercle présentes dans l'exemple de réalisation précité relatifs aux pattes de renfort.

Avantageusement, ladite structure de conduite peut être réalisée intégralement en un matériau thermoplastique moulé par injection ou bien, en variante, en un matériau métallique de préférence par emboutissage.

Une ligne d'admission selon l'invention d'un moteur thermique à combustion interne, tel qu'un moteur turbocompressé pour véhicule automobile, comporte au moins un dispositif d'atténuation acoustique selon l'invention tel que défini ci-dessus, deux desdits conduits souples et déformables raccordant le dispositif au reste de la ligne et formant l'enveloppe tubulaire externe de ce dispositif.

D'autres avantages, caractéristiques et détails de l'invention ressortiront du complément de description qui va suivre en référence à des dessins annexés, donnés uniquement à titre d'exemples et dans lesquels :
la figure 1 est une vue schématique en section axiale légèrement éclatée illustrant le principe de fonctionnement d'un dispositif d'atténuation à deux chambres de résonance selon l'invention,
la figure 2 est une vue latérale d'un dispositif d'atténuation selon l'invention tel que celui schématisé à la figure 1,
la figure 3 est une vue en perspective de l'intérieur du dispositif d'atténuation de la figure 2 selon le premier mode de réalisation de l'invention, ce dispositif ayant été sectionné axialement, et
la figure 4 est une vue en perspective de l'intérieur du dispositif d'atténuation de la figure 2 selon le second mode de réalisation de l'invention, ce dispositif ayant été également sectionné axialement.

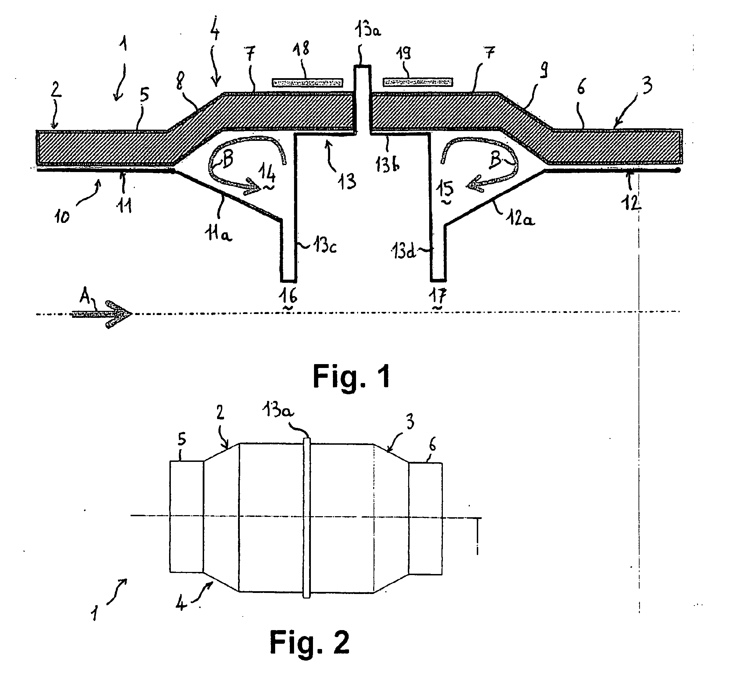

Le dispositif d'atténuation acoustique 1 illustré aux figures 1 à 4 est avantageusement destiné à être intégré à une ligne d'admission d'un moteur turbocompressé de véhicule automobile en étant parcouru par de l'air sous pression, et cette intégration est réalisée selon l'invention par deux conduits de raccordement 2 et 3 souples et déformables (de préférence en caoutchouc) qui font partie du dispositif d'atténuation 1 lui-même, comme détaillé ci-aprè. En effet, ce dispositif 1 comporte :
- une enveloppe tubulaire 4 radialement extérieure constituée par ces deux conduits souples 2 et 3 et présentant deux portions d'extrémité 5 et 6 respectivement d'entrée et de sortie de l'air, et une portion axialement centrale 7 qui présente un diamètre supérieur à celui des portions d'extrémité 5 et 6 et qui les relie entre elles par deux portions de transition 8 et 9 sensiblement coniques faisant par exemple un angle de 30° à 50° avec ces portions 5 et 6, et
- une structure de conduite 10 radialement interne à l'enveloppe 4 comportant deux tronçons tubulaires d'extrémité 11 et 12 respectivement solidarisés avec les portions d'extrémité 5 et 6, et un tronçon axialement central 13 qui est en contact avec la portion centrale 7 en délimitant avec cette dernière et les portions de transition 8 et 9 deux chambres annulaires de résonance 14 et 15 (voir à la figure 1 la flèche A représentant le sens d'écoulement de l'air dans la structure de conduite 10, et les flèches B symbolisant la circulation de l'air dans ces chambres 14 et 15) et qui est séparé de chaque tronçon d'extrémité 11 et 12 par un espace axial de liaison 16, 17 faisant communiquer radialement chaque tronçon 11, 12 avec la chambre 14, 15 correspondante.

En outre, le dispositif 1 selon l'invention comporte deux colliers métalliques de serrage 18 et 19 qui sont appliqués sur ces conduits 2 et 3 au niveau de la portion centrale 7 de l'enveloppe 4, pour plaquer de manière étanche cette portion centrale 7 sur le tronçon central 13.

Plus précisément, les deux conduits souples 2 et 3 sont montés axialement de part et d'autre et au contact d'une collerette radiale 13a que présente une paroi axiale cylindrique 13b du tronçon central 13, paroi 13b qui prolonge à angle droit deux parois radiales 13c et 13d en forme de couronnes circulaires de ce même tronçon 13 et qui est montée directement sous la portion centrale 7, la collerette 13a formant un renflement circonférentiel pour cette portion 7 (notamment visible à la figure 2). Comme illustré à la figure-1, les conduits 2 et 3 forment respectivement deux moitiés de l'enveloppe 4 symétriques l'une de l'autre par rapport au plan médian de la collerette 13a et comprenant chacune l'une des portions d'extrémité 5 et 6, la portion de transition 8, 9 adjacente et la moitié de la portion centrale 7.

De plus, le tronçon d'extrémité 11, 12 de la structure 10 radialement en regard de chaque portion de transition 8, 9 de l'enveloppe 4 présente une partie conique convergente 11a, 12a délimitant chaque chambre de résonance 14, 15 avec cette portion de transition 8, 9, la portion centrale 7 adjacente et avec la paroi radiale 13c, 13d en regard du tronçon central 13.

Conformément aux figures 1, 3 et 4 qui illustrent un exemple de réalisation des deux espaces axiaux de liaison 16 et 17 selon l'invention, chaque tronçon d'extrémité 11 et 12 est relié à la paroi radiale 13c, 13d correspondante du tronçon central 13 par une paire de pattes axiales de renfort 20 qui sont formées d'un seul tenant avec ces tronçons d'extrémité 11 et 12 et qui définissent au moins deux lumières 21 en arcs de cercle circonférentiellement de part et d'autre de chaque patte 20 et concourant à former l'espace de liaison 16, 17, de sorte à faire communiquer radialement l'intérieur de la structure 10 avec chaque chambre 14, 15. Ces pattes 20 peuvent présenter une largeur réduite dans la direction circonférentielle et sont par exemple diamétralement opposées.

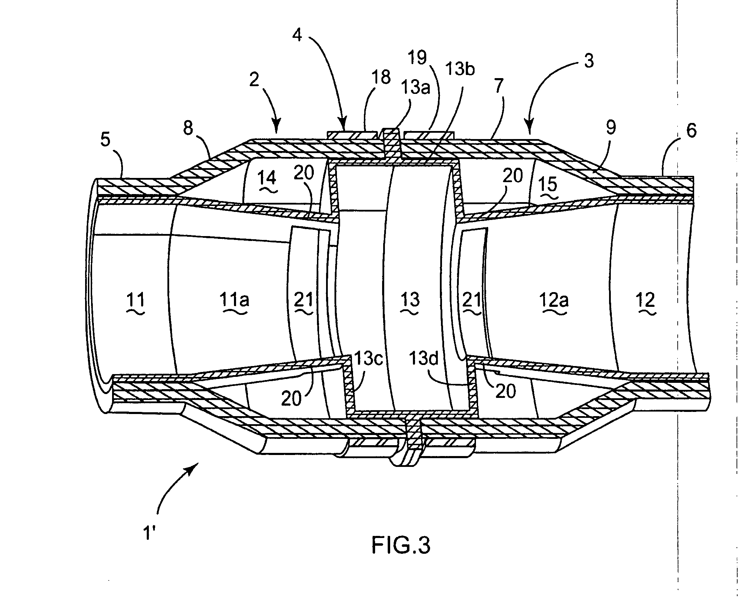

Le dispositif d'atténuation 1' illustré à la figure 3 correspond au premier mode de réalisation de l'invention, dans lequel la section de passage pour l'air qui est formée dans le tronçon central 13 est définie par la face radialement interne de la paroi axiale 13b de ce tronçon 13, ses parois radiales 13c et 13d n'étant pas reliées entre elles en leurs bases respectives. Il en résulte un élargissement radial significatif de cette section de passage lors de l'entrée de l'air dans ce tronçon central 13, suivi d'un rétrécissement à l'identique de cette section de passage à l'entrée du tronçon de sortie 12.

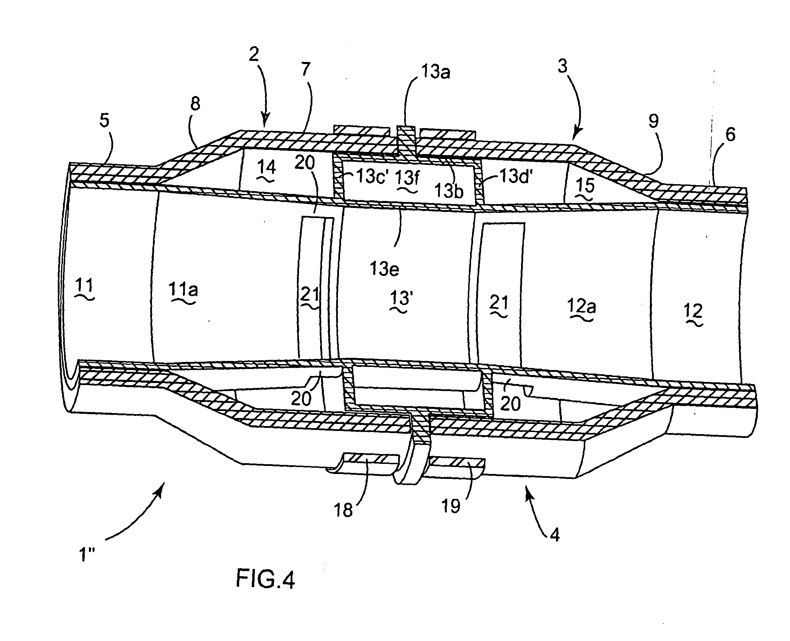

Le dispositif d'atténuation 1" illustré à la figure 4 correspond au second mode de réalisation de l'invention, dans lequel la section de passage pour l'air qui est formée dans le tronçon-central 13' est définie par la face radialement interne d'une autre paroi axiale 13e de ce tronçon 13' qui relie les parois radiales 13c' et 13d' entre elles en leurs bases respectives, de sorte que ce tronçon central 13' présente un volume annulaire radialement externe 13f qui est fermé à l'air (ce volume annulaire 13f peut être de section axiale sensiblement rectangulaire). Il en résulte que la section de passage pour l'air est dans ce cas sensiblement constante du tronçon d'entrée 11 au tronçon central 13', et de ce dernier au tronçon de sortie 12.

D'une manière générale, on notera qu'il est possible de faire varier la position axiale et/ou la largeur axiale de l'espace de liaison 16, 17 formé entre chaque tronçon d'extrémité 11, 12 de la structure de conduite 10 et le tronçon central 13, 13', en s'écartant des agencements illustrés aux figures 1 à 4, ainsi que de choisir diverses valeurs pour le volume de l'une ou des deux chambre(s) de résonance 14 et 15 (ces volumes pouvant être choisis identiques ou différents), afin d'obtenir une atténuation acoustique satisfaisante dans des conditions déterminées de fonctionnement.

## Revendications

1. Dispositif d'atténuation acoustique (1, 1', 1") pour une ligne d'admission d'un moteur thermique à combustion interne, tel qu'un moteur turbocompressé pour véhicule automobile, ce dispositif, destiné à être parcouru par un fluide gazeux sous pression, étant intégré à cette ligne par des conduits de raccordement souples et déformables (2 et 3), et comportant :
- une enveloppe tubulaire (4) radialement extérieure présentant deux portions d'extrémité (5 et 6) respectivement d'entrée et de sortie du fluide et une portion axialement centrale (7) de diamètre supérieur à celui de ces portions d'extrémité et reliant ces dernières entre elles, et
- une structure de conduite (10) radialement interne à l'enveloppe qui est solidaire des portions d'extrémité et qui comporte un tronçon axialement central (13, 13') en contact avec la portion centrale et délimitant avec celle-ci deux chambres annulaires de résonance (14 et 15), **caractérisé en ce que** l'enveloppe est constituée par deux desdits conduits souples (2 et 3) montés axialement de part et d'autre et au contact d'une collerette radiale (13a) de la structure de conduite formant un renflement circonférentiel pour ladite portion centrale, des moyens de serrage (18 et 19) étant appliqués sur ces conduits pour plaquer de manière étanche cette portion centrale sur ledit tronçon central.

2. Dispositif (1, 1', 1") selon la revendication 1, **caractérisé en ce que** lesdits conduits (2 et 3) forment respectivement deux parties de l'enveloppe (4) qui sont sensiblement symétriques l'une de l'autre par rapport à ladite collerette (13a) et qui comprennent chacune l'une desdites portions d'extrémité (5 et 6) et une moitié de ladite portion centrale (7).

3. Dispositif (1, 1', 1") selon la revendication 1 ou 2, **caractérisé en ce que** lesdits conduits (2 et 3) sont chacun à base d'un matériau élastomère, et **en ce que** lesdits moyens de serrage comprennent au moins deux colliers métalliques (18 et 19) respectivement appliqués sur ces conduits.

4. Dispositif (1, 1', 1") selon une des revendications précédentes, **caractérisé en ce que** la structure de conduite (10) comporte deux tronçons tubulaires d'extrémité (11 et 12) qui sont respectivement solidarisés avec lesdites portions d'extrémité (5 et 6) de l'enveloppe et qui sont chacun séparés dudit tronçon central (13, 13') par un espace axial de liaison (16, 17) faisant communiquer radialement chaque tronçon d'extrémité avec ladite chambre de résonance (14, 15) correspondante.

5. Dispositif (1, 1', 1") selon la revendication 4, **caractérisé en ce que** ladite portion centrale (7) est reliée à chacune desdites portions d'extrémité (5 et 6) par une portion de transition (8, 9) divergeant à partir de cette portion d'extrémité, ledit tronçon d'extrémité (11, 12) radialement en regard de chaque portion de transition présentant une partie convergente (11 a, 12a) délimitant chaque chambre de résonance (14, 15) avec la portion de transition, ladite portion centrale et ledit tronçon central (13, 13').

6. Dispositif (1, 1', 1") selon la revendication 5, **caractérisé en ce que** chaque portion de transition (8, 9) et ladite partie convergente (11a, 12a) de chaque tronçon d'extrémité (11, 12) sont sensiblement coniques en formant toutes deux un angle avec la direction axiale qui est inférieur à 60°.

7. Dispositif (1, 1', 1") selon une des revendications 4 à 6, **caractérisé en ce que** ledit tronçon central (13, 13') est défini par deux parois radiales (13c, 13c' et 13d, 13d') en forme de couronnes sensiblement perpendiculaires à ladite portion centrale (7) de l'enveloppe (4), et par une paroi axiale (13b) sensiblement cylindrique qui s'étend à angle droit à partir des sommets respectifs de ces parois radiales et qui est montée sous cette portion centrale en présentant ladite collerette (13a).

8. Dispositif (1, 1') selon la revendication 7, **caractérisé en ce que** la section de passage pour le fluide dudit tronçon central (13) est définie par la face radialement interne de ladite paroi axiale (13b) de ce tronçon, lesdites parois radiales (13c et 13d) n'étant pas reliées entre elles en leurs bases respectives.

9. Dispositif (1") selon la revendication 7, **caractérisé en ce que** la section de passage pour le fluide dudit tronçon central (13') est définie par la face radialement interne d'une autre paroi axiale (13e) de ce tronçon qui relie lesdites parois radiales (13c' et 13d') entre elles en leurs bases respectives, de sorte que ce tronçon central présente un volume annulaire (13f) radialement externe qui est fermé audit fluide.

10. Dispositif (1, 1', 1") selon une des revendications 7 à 9, **caractérisé en ce que** chacun desdits tronçons d'extrémité (11, 12) est relié à ladite paroi radiale (13c ou 13c',13d ou 13d') correspondante dudit tronçon central (13, 13') par au moins une paire de pattes axiales de renfort (20) de la structure de conduite (10), laquelle est formée d'un seul tenant, chaque espace axial de liaison (16, 17) étant défini circonférentiellement par au moins deux lumières (21) en arcs de cercle formées de part et d'autre de chaque patte.

11. Dispositif selon une des revendications 4 à 9, **caractérisé en ce que** lesdits tronçons d'extrémité sont distants et indépendants dudit tronçon central (13, 13'), chaque espace axial de liaison formant un espace vide entre le tronçon d'extrémité correspondant et ce tronçon central.

12. Dispositif (1, 1', 1") selon une des revendications précédentes, **caractérisé en ce que** ladite structure de conduite (10) est réalisée intégralement en un matériau thermoplastique moulé par injection.

13. Dispositif (1, 1', 1") selon une des revendications 1 à 11, **caractérisé en ce que** ladite structure de conduite (10) est réalisée intégralement en un matériau métallique, de préférence par emboutissage.

14. Ligne d'admission d'un moteur thermique à combustion interne, tel qu'un moteur turbocompressé pour véhicule automobile, **caractérisée en ce qu'**elle comporte au moins un dispositif d'atténuation acoustique (1, 1', 1") selon une des revendications précédentes, deux desdits conduits souples et déformables (2 et 3) raccordant le dispositif au reste de la ligne et formant l'enveloppe tubulaire externe (4) de ce dispositif.

## Claims

1. Sound attenuating device (1, 1', 1") for an intake line of an internal combustion engine, such as a turbocharged engine for an automotive vehicle, this device, designed to transfer a compressed gaseous fluid, being integrated in this line by means of flexible and deformable connecting pipes (2 and 3), and comprising:
- a radially outer tubular jacket (4) comprising two end portions (5 and 6) for the intake and discharge of the fluid respectively and an axially central portion (7) with a diameter bigger than that of these end portions and connecting the latter to one another, and
- a pipe structure (10) radially inside the jacket which is joined to the end portions and which comprises an axially central section (13, 13') in contact with the central portion and bounding two annular resonance chambers (14 and 15) in conjunction with it,
**characterised in that** the jacket is made up of two of said flexible pipes (2 and 3) mounted axially on either side and in contact with a radial flange (13a) of the pipe structure forming a circumferential boss for said central portion, clamping means (18 and 19) being applied to these pipes in order to tightly retain this central portion on said central run.

2. Device (1, 1', 1 ") as claimed in claim 1, **characterised in that** said pipes (2 and 3) respectively constitute two parts of the jacket (4) which are substantially symmetrical with one another relative to said flange (13a) and each of which comprises one of said end portions (5 and 6) and a half of said central portion (7).

3. Device (1, 1', 1 ") as claimed in claim 1 or 2, **characterised in that** said pipes (2 and 3) are each made from an elastomer-based material, and **in that** said clamping means comprise at least two metal collars (18 and 19) respectively applied to these pipes.

4. Device (1, 1', 1") as claimed in one of the preceding claims, **characterised in that** the pipe structure (10) comprises two tubular end sections (11 and 12) which are respectively joined to said end portions (5 and 6) of the jacket and each of which is separated from said central section (13, 13') by an axial connecting space (16, 17) making each end section communicate radially with said corresponding resonance chamber (14, 15).

5. Device (1, 1', 1 ") as claimed in claim 4, **characterised in that** said central portion (7) is connected to each of said end portions (5 and 6) via a transition portion (8, 9) diverging from this end portion, said end section (11, 12) radially facing each transition portion having a converging part (11 a, 12a) bounding each resonance chamber (14, 15) with the transition portion, said central portion and said central section (13, 13').

6. Device (1, 1', 1 ") as claimed in claim 5, **characterised in that** each transition portion (8, 9) and said converging part (11a, 12a) of each end portion (11, 12) are substantially conical, both subtending an angle of less than 60° with the axial direction.

7. Device (1, 1', 1 ") as claimed in one of claims 4 to 6, **characterised in that** said central section (13, 13') is defined by two radial walls (13c, 13c' and 13d, 13d') in the shape of crowns substantially perpendicular to said central portion (7) of the jacket (4), and by a substantially cylindrical axial wall (13b) which extends at a right angle from the respective apexes of these radial walls and which is mounted underneath this central portion by incorporating said flange (13a).

8. Device (1, 1') as claimed in claim 7, **characterised in that** the passage section for the fluid of said central section (13) is defined by the radially internal face of said axial wall (13b) of this section, said radial walls (13c and 13d) not being connected to one another at their respective bases.

9. Device (1 ") as claimed in claim 7, **characterised in that** the passage section for the fluid of said central section (13') is defined by the radially internal face of another axial wall (13e) of this section which connects said radial walls (13c' and 13d') to one another at their respective bases so that this central section has a radially outer annular volume (13f) which is closed off from said fluid.

10. Device (1, 1', 1") as claimed in one of claims 7 to 9, **characterised in that** each of said end sections (11, 12) is connected to said corresponding radial wall (13c or 13c', 13d or 13d') of said central section (13, 13') by at least one pair of integrally formed axial reinforcing tabs (20) of the pipe structure, each axial connecting space (16, 17) being circumferentially defined by at least two apertures (21) in the shape of circular arcs on either side of each tab.

11. Device as claimed in one of claims 4 to 9, **characterised in that** said end sections are spaced apart from and independent from said central section (13, 13'), each axial connecting space forming an empty space between the corresponding end section and this central section.

12. Device (1, 1', 1") as claimed in one of the preceding claims, **characterised in that** said pipe structure (10) is made integrally from an injection-moulded thermoplastic material.

13. Device (1, 1', 1") as claimed in one of claims 1 to 11, **characterised in that** said pipe structure (10) is made integrally from a metal material, preferably by stamping.

14. Intake line for an internal combustion engine, such as a turbocharged engine for an automotive vehicle, **characterised in that** it comprises at least one sound attenuating device (1, 1', 1") as claimed in one of the preceding claims, two of said flexible and deformable pipes (2 and 3) connecting the device to the rest of the line and constituting the external tubular jacket (4) of this device.

## Patentansprüche

1. Vorrichtung (1, 1', 1") zur akustischen Dämpfung für eine Zufuhrleitung eines thermischen Verbrennungsmotors wie eines Motors mit Turbokompressor für ein Automobilfahrzeug, wobei die Vorrichtung, welche dazu bestimmt ist, von einem gasförmigen Fluid unter Druck durchflossen zu werden, mit der Leitung durch biegsame und deformierbare Leitungen zum Anschließen (2 und 3) integriert ist und umfasst:
- eine radial außerhalb liegende rohrförmige Hülle (4), welche zwei Endabschnitte (5 und 6) zum Eintreten und zum Austreten des Fluids und einen axial mittleren Abschnitt (7) mit Durchmesser größer als derjenige der Endabschnitte, welche die letzteren miteinander verbinden, aufweist, und
- eine radial zu der Hülle innenliegende Leitungsstruktur (10), welche mit den Endabschnitten verbunden ist und ein axial mittleres Teilstück (13, 13') in Kontakt mit dem mittleren Abschnitt beinhaltet und mit diesem zwei ringförmige Resonanzkammern (14 und 15) begrenzt,
**dadurch gekennzeichnet, dass** die Hülle durch zwei der biegsamen Leitungen (2 und 3) gebildet ist, welche axial auf beiden Seiten und in Kontakt mit einer radialen Krause (13a) der Leitungsstruktur angebracht sind und eine umfangsmäßige Ausbuchtung für den Mittelabschnitt bilden, wobei Einspannmittel (18 und 19) auf die Leitungen angewandt sind, um den Mittelabschnitt in dichter Weise auf das mittlere Teilstück zu schichten.

2. Vorrichtung (1, 1', 1") gemäß Anspruch 1, **dadurch gekennzeichnet, dass** die Leitungen (2 und 3) jeweils zwei Teile der Hülle (4) bilden, welche im Wesentlichen zueinander symmetrisch bezüglich der Krause (13a) sind und welche jeweils einen der Endabschnitte (5 und 6) und eine Hälfte des Mittelabschnitts (7) umfassen.

3. Vorrichtung (1, 1', 1") gemäß Anspruch 1 oder 2, **dadurch gekennzeichnet, dass** die Leitungen (2 und 3) jeweils auf Basis eines Elastomermaterials sind, und dass die Einspannmittel zumindest zwei metallische Ringe (18 und 19) umfassen, welche jeweils auf die Leitungen angewendet sind.

4. Vorrichtung (1, 1', 1") gemäß einem der vorhergehenden Ansprüche, **dadurch gekennzeichnet, dass** die Leitungsstruktur (10) zwei rohrförmige Endteilstücke (11 und 12) beinhaltet, welche jeweils mit den Endabschnitten (5 und 6) der Hülle verbunden sind und welche jeweils von dem mittleren Teilstück (13, 13') durch einen axialen Verbindungsraum (16, 17) getrennt wird, welcher jedes Endteilstück radial mit der entsprechenden Resonanzkammer (14, 15) verbindet.

5. Vorrichtung (1, 1', 1") gemäß Anspruch 4, **dadurch gekennzeichnet, dass** der Mittelabschnitt (7) mit jedem der Endabschnitte (5 und 6) durch einen ausgehend von dem Endabschnitt auseinander gehenden Übergangsabschnitt (8, 9) verbunden ist, wobei das Endteilstück (11, 12), welches radial jedem Übergangsabschnitt gegenübersteht, einen zusammenlaufenden Teil (11a, 12a) aufweist, welcher jede Resonanzkammer (14, 15) mit dem Übergangsabschnitt, dem Mittelabschnitt und dem mittleren Teilstück (13, 13') begrenzt.

6. Vorrichtung (1, 1', 1") gemäß Anspruch 5, **dadurch gekennzeichnet, dass** jeder Übergangsabschnitt (8, 9) und der zusammenlaufende Teil (11a, 12a) jedes Endteilstücks (11, 12) im Wesentlichen konisch sind, wobei sie alle beide einen Winkel mit der axialen Richtung bilden, welcher kleiner als 60° ist.

7. Vorrichtung (1, 1', 1") gemäß einem der Ansprüche 4-6, **dadurch gekennzeichnet, dass** das mittlere Teilstück (13, 13') durch zwei kronenförmige radiale Wände (13c, 13c' und 13d, 13d'), welche im Wesentlichen senkrecht zu dem Mittelabschnitt (7) der Hülle (4) sind, und durch eine im Wesentlichen zylindrische axiale Wand (13b), welche sich im rechten Winkel ausgehend von jeweiligen Spitzen der radialen Wände erstreckt und welche die Krause aufweisend (13a) unter dem Mittelabschnitt angebracht ist, definiert ist.

8. Vorrichtung (1, 1') gemäß Anspruch 7, **dadurch gekennzeichnet, dass** der Durchgangsquerschnitt des mittleren Teilstücks (13) für das Fluid durch die radial innenliegende Fläche der axialen Wand (13b) dieses Teilstücks definiert ist, wobei die radialen Wände (13c und 13d) nicht miteinander an ihren Basen verbunden sind.

9. Vorrichtung (1, 1') gemäß Anspruch 7, **dadurch gekennzeichnet, dass** der Durchgangsquerschnitt des mittleren Teilstücks (13') für das Fluid durch die radial innenliegende Fläche einer weiteren axialen Wand (13e) des Teilstücks definiert ist, welche die radialen Wände (13c' und 13d') miteinander an ihren Basen in einer Weise verbindet, dass das mittlere Teilstück ein ringförmiges radial außenliegendes Volumen (13f) aufweist, welches für das Fluid geschlossen ist.

10. Vorrichtung (1, 1', 1") gemäß einem der Ansprüche 7-9, **dadurch gekennzeichnet, dass** jedes der Endteilstücke (11, 12) mit der entsprechenden radialen Wand (13c oder 13c', 13d oder 13d') des mittleren Teilstücks (13, 13') über zumindest ein Paar von axialen Verstärkungslaschen (20) der Leitungsstruktur (10) verbunden ist, welches aus einem einzigen Anhänger gebildet ist, wobei jeder axiale Verbindungsraum (16, 17) umfangsmäßig durch zumindest zwei kreisbogenförmige Öffnungen (21) definiert ist, welche auf beiden Seiten der Lasche gebildet sind.

11. Vorrichtung gemäß einem der Ansprüche 4-9, **dadurch gekennzeichnet, dass** die Endteilstücke beabstandet und unabhängig von dem mittleren Teilstück (13, 13') sind, wobei jeder axiale Verbindungsraum einen Leerraum zwischen dem jeweiligen Endteilstück und dem mittleren Teilstück bildet.

12. Vorrichtung (1, 1', 1") gemäß einem der vorhergehenden Ansprüche, **dadurch gekennzeichnet, dass** die Leitungsstruktur (10) integral aus einem durch Spritzen geformten thermoplastischen Material gefertigt ist.

13. Vorrichtung (1, 1', 1") gemäß einem der Ansprüche 1-11, **dadurch gekennzeichnet, dass** die Leitungsstruktur (10) integral aus einem metallischen Material gefertigt ist, bevorzugt durch Tiefziehen.

14. Zufuhrleitung für einen thermischen Verbrennungsmotor wie einem Motor mit Turbokompressor für ein Automobilfahrzeug, **dadurch gekennzeichnet, dass** sie zumindest eine Vorrichtung (1, 1', 1") zur akustischen Dämpfung gemäß einem der vorhergehenden Ansprüche beinhaltet, wobei zwei der biegsamen und deformierbaren Leitungen (2 und 3) die Vorrichtung mit dem Rest der Leitung verbinden und die äußere rohrförmige Hülle (4) der Vorrichtung bilden.
